# NEUE EUROPÄISCHE PATENTSCHRIFT

(11) **EP 0 158 736 B2**
(45) Veröffentlichungstag und Bekanntmachung des Hinweises auf die Entscheidung über den Einspruch: **19.05.1993**
(45) Hinweis auf die Patenterteilung: 18.05.1988
(21) Anmeldenummer: 84116211.8
(22) Anmeldetag: 22.12.1984
(51) Int. Cl.: D06B 1/00, D06P 5/00

(54) **Verfahren und Vorrichtung zum kontinuierlichen Behandeln von bahnförmiger Textilware wie Teppiche**
Process and device for continuously treating flat textile fabrics, such as carpets
Procédé et dispositif pour le traitement en continu de matières textiles en feuille, notamment de tapis

(30) Priorität: 23.03.1984 DE 3410740; 30.05.1984 DE 3420208
(43) Veröffentlichungstag der Anmeldung: 23.10.1985
(73) Patentinhaber: FLEISSNER Maschinenfabrik AG, CH-9445 Rebstein (CH)
(72) Erfinder: Fleissner, Gerold, CH-7006 Chur (CH)

(56) Entgegenhaltungen:
- DE-A- 1 710 471
- DE-A- 2 412 030
- DE-A- 2 700 312
- DE-A- 2 938 766
- DE-A- 3 002 970
- US-A- 3 922 141
- US-A- 4 239 490

## Beschreibung

Die Erfindung bezieht sich auf ein Verfahren zum kontinuierlichen Behandeln von bahnförmiger Textilware, wie insbesondere Teppiche größerer Breite mit polförmiger Sichtseite, die einem Färbevorgang unterzogen wird, indem sie zum Netzen mit einer Minimalmenge an wäßriger Flüssigkeit, die die Färbechemikalien enthält, versehen und zum Fixieren dieser Farbe durch einen Dämpfer transportiert und nach dem Färbevorgang die Textilware entwässert, ggf. vorgetrocknet wird.

Eine hier geeignete Vorrichtung zum Färben ist aus der DE-A-30 45 644 bekannt. Sie ist insbesondere vorteilhaft für das gleichmäßige Färben von polförmigen Teppichen größerer Arbeitsbreite, wie z.B. 5 m, da mit Hilfe dieser Vorrichtung ein gleichmäßiger Auftrag der Färbeflüssigkeit durch Aufgießen oder Aufpflatschen möglich ist und dann die Vergleichmäßigung der Flottenverteilung bis tief in die Wurzel der Florfaser durch Massieren der Floroberfläche erfolgt. Der Vorteil dieses Färbeverfahrens liegt nicht nur in der Gleichmäßigkeit und in der geringen Menge an notwendiger Färbeflotte, sondern in einer kurzen Dämpfzeit und Vermeidung eines aufwendigen Wasch- und Trockenvorganges (siehe dazu DE-A-1 635 096).

Es ist bekannt, nach dem Färben, Dämpfen, Waschen und Trocknen eines Teppichs diesen aufzurollen und zwischenzulagern. Je nach Kapazität einer Beschichtungsanlage wird dann dieser gefärbte Teppich auf der Rückseite mit einem Vorstrich versehen und ggf. in einem fortlaufenden Verfahren nach einer ausreichenden Bindung des Flors mit dem Grundmaterial der Ware dort weiterhin ein Schaum aufgerakelt, kaschiert oder mit einem zweiten Rücken verklebt, der dann anschließend zu trocknen und zu vulkanisieren ist. Für die Färbung des Teppichs als auch für die Beschichtung des Teppichrückens ist jeweils eine Kontinue-Anlage und dafür jeweils eine bestimmte Anzahl von Bedienungsleuten erforderlich, abgesehen von dem notwendigen Zwischenlager und den Transportwegen zwischen Färberei und Beschichtung.

Durch die DE-A-1 710471 ist zwar ein Verfahren und dazu auch eine Vorrichtung zum Färben von textilen Warenbahnen bekannt, bei dem zum beidseitigen Netzen der Warenbahn in einem geschlossenen Gehäuse zwei Pflatschvorrichtungen hintereinander angeordnet sind, und in dem Gehäuse die Warenbahn so geführt ist, daß sie einmal mit der vorderseite und einmal mit der Rückseite auf den Walzen der Pflatschvorrichtung zur Auflage kommt. Um die auf diese Weise beidseitig mit dem Farbstoff versehene Ware noch in dieser Netzeinrichtung farbzufixieren, wird je nach Art der verwendeten Farbstoffe Sattdampf oder Heißluft auf die Warenbahn geblasen. Die vorbekannte Vorrichtung ist aber allein nur für eine Netzung der Warenbahn auf beiden Seiten brauchbar, bei der die beidseitige Behandlung insgesamt gleich ist, jedenfalls die Wärmebehandlung nach dem Auftragen der Flüssigkeit auf die eine Seite der Warenbahn nicht hinderlich ist für die notwendige Wärmebehandlung nach dem Auftragen der zweiten Flüssigkeit auf die andere Seite der Warenbahn. In der Praxis gilt dies nur für den Färbevorgang von Möbelplüschware, bei der die Polfasern aus Polyamid und das Grundgewebe aus Baumwolle bestehen. Da die unterschiedlichen Fasern nich mit dem gleichen Farbstoff gefärbt werden können, sind für die Veloursseite und für den Rücken jeweils eine Färbevorrichtung notwendig. In der Vorveröffentlichung ist auch erwähnt, daß auf Warenbahnen Flussigkeiten aufgetragen werden können, die die Florseite wasserabstoßend machen und die die Unterseite mit einer Haft-oder Klebeschicht versehen. Diese Haft- und Klebeschicht ist nicht mit einer Rückenbeschichtung zu verwechseln, um den Teppichrücken herzustellen, es handelt sich dort nur um eine Klebeschicht zum Aufkleben der Möbelplüschware auf eine Gestell, auf eine Polsterung od. dgl., während die Sichtseite gleichzeitig nicht gefärbt, sondern lediglich mit einer nicht zu fixierenden Flüssigkeit getränkt wird.

Der Erfindung liegt die Aufgabe zugrunde, das oben beschriebene aufwendige Behandlungsverfahren für insbesondere Teppiche zu vereinfachen, um weniger Kapital zu binden und mit nur einer gleich großen Bedienungsmannschaft einer üblichen Kontinue-Anlage gleich einen gefärbten und beschichteten Teppich liefern zu können.

Ausgehend von dem Verfahren anfangs gennanter Art besteht die Erfindung zur Lösung der gestellten Aufgabe darin, daß die Textilware gleich anschließend auf der Warenrückseite mit einem Binde-Vorstrich zur Rückenbeschichtung versehen, wiederum zumindest vorgetrocknet wird, und daß ebenfalls anschließend die Rückseite der Textilware mit dem vorgetrockneten Vorstrich weiterhin mit einem Schaum, mit einem zweiten Rücken versehen oder dieser kaschiert und die Textilware anschließend in eine horizontal ausgerichtete Wärmebehandlungseinrichtung zum Trocken und Vulkanisieren gefahren wird. Es handelt sich also um ein kontinuierliches Färben des Flors und Beschichten des Rückens des Teppichs unmittelbar hintereinander, und zwar ohne daß der Teppich nach dem Färben gewaschen und getrocknet werden muß. Dies ist erfinderischer Weise möglich mit einem Minimalauftrag an Farbflotte (40 - 200 %) und ev. dem nachfolgenden Massieren des Flors zur Verteilung der Flotte über die Höhe des Flors, so daß nicht nur durch dieses neue Verfahren einige einen größeren Platz einnehmende Aggregate, wie insbesondere Wasch- und Trockenmaschinen, in der Kontinue-Anlage völlig entfallen können, sondern auch die zur Durchführung des Verfahrens notwendige Anlage von nur einer Bedienungsmannschaft von zB. einer üblichen Beschichtungsanlage, ggf. mit einem zusätzlichen Färber, bedient werden kann.

Das Verfahren nach der Erfindung hat den Vorteil, daß man Hilfsmittel schon in die Färbeflüssigkeit geben kann, die üblicherweise erst nach dem jetzt entfallenden Waschen aufgegeben wurden, nämlich solche, die die Endqualität positiv beeinflussen, wie schmutzabweisende oder die mechanischen Gebrauchseigenschaften vorteilhaft verändernde Hilfsmittel.

Mit Vorteil kann dieser Uni-Farbauftrag anschließend naß in naß noch gemustert werden, z. B. durch Ätzdruck oder Schaumdruck, wobei jedoch dieser Schaum keine Verdicker enthalten darf. Je nach Gestaltung der Schablone ist auch ein Farbeffekt Ton in Ton mit Helligkeitsunterschieden erreichbar.

Beim Verfahren nach der Erfindung ist es sogar denkbar, nicht nur den Färbe- und den Beschichtungsvorgang zusammenzuschließen, sondern mit der Teppichherstellung selber unmittelbar zu verbinden, indem kontinuierlich eine Trägerbahn mit dem Pol für den Teppich versehen, wie z. B. beklebt wird und gleich anschließend der Färbevorgang - oder auch unter Umgehung der Färbestation - die Beschichtung bzw. Kaschierung beginnt.

Eine Vorrichtung zur Durchführung des Verfahrens besteht aus den dazu notwendigen Aggregaten. Sie sind in Kombination Gegenstand der Anmeldung und in der folgenden beispielshaften Figurenbeschreibung im einzelnen beschrieben.

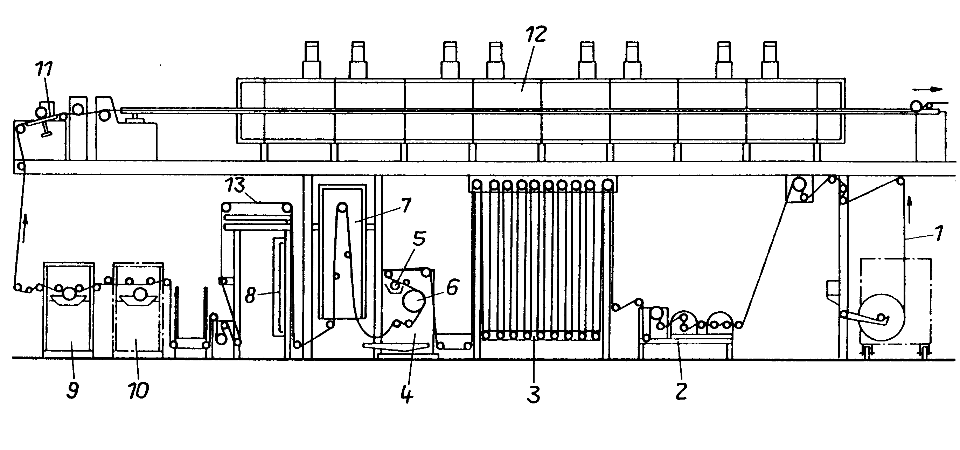

Die Figur zeigt eine in zwei Etagen angeordnete Kontinue-Anlage, die aus folgenden hintereinander tätigen Aggregaten aufgebaut ist. Der im Ausführungsbeispiel bereits mit dem Flor versehene und nach der Herstellung aufgerollte Teppich 1, der nach der zu beschreibenden Behandlung auch in Fliesen geschnitten werden kann, wird von einer Rolle abgezogen, in einer Einheit 2 in Bezug auf Bogenverzug und Lage gerichtet, dann durch eine Puffer-Einrichtung 3 gefahren und dem Farbauftragswerk 4 zum Färben oder Bedrucken des Flors zugeführt. Die Farbflüssigkeit kann aufgepflatscht, foulardiert oder aufgesprüht werden. Das dargestellte Gerät besteht aus einem ggf. gravierten oder mit einer oszillierenden Rakel versehenen Pflatschwalze 5, die den Flor mit einem Minimalauftrag von Färbeflüssigkeit versieht, und einem Stabrotor6, dergleich in Anschlußan den Auftrag den Flor massiert zur Vergleichmäßigung der Flotte über den Flor der Teppichbahn. Die Flotte enthält auch aufziehbare z. B. Fixierbeschleuniger und die Endqualität vorteilhaft beeinflussende Hilfsmittel, da diese Auswaschbaren hier nicht ausgewaschen werden. An diese Vorrichtung 4 kann sich noch ein Druckwerk für Ätzdruck oder Schmaumdruck mittels Schablone oder Druckwalze anschließen (nicht dargestellt).

Anschließ end gelangt der Teppich 1 in einen Hängeschlaufendämpfer 7, der im Ausführungsbeispiel nur mit einer Schlaufe dargestellt ist. Es ist auch möglich, den Dämpfer zu vergrößern, um eine längere Verweilzeit zu erzielen. Dies ist aber nur bedingt notwendig, da der Färbeflüssigkeit Fixierbeschleuniger beigegeben sind und ein Nachfixieren im folgenden Trockner 8, 13, und auch noch im Spannrahmen 12 erfolgt. Nach dem Dämpfen wird im Beispiel der Teppichrücken entlang einer lotrecht angeordneten Heizstrecke 8, die mit Infrarotstrahlern versehen ist, gefahren, dort vorgetrocknet und anschließend eine gewisse Strecke 13 horizontal geführt, in der jetzt der durch den Flor aufsteigende Trocknungsdampf ein Nachfixieren der gefärbten Fasern des Flors bewirkt. Dieser die zu beschichtende Seite beaufschlagende Trocknungsvorgang kann je nach Färbevorgang auch entfallen. Wichtig ist, daß die Färbeflotte die Rückseite des Teppichs nicht genäßt hat und der Vorstrich 10 so viskos ist, daß keine Vortrocknung für die Beschichtung notwendig ist.

Gleich im Anschluß an die Vortrocknung mittels der Heizstrecke 8 wird naß in naß jetzt der Rücken mit einem Vorstrich versehen, wozu die Pflatschwerke 9 und 10 vorgesehen sind. Je nach Verfahren sind dazu zwei Aggregate oder auch nur eines erforderlich. Der Vorstrich kann auch mittels einer Rakeleinrichtung 11 aufgegeben werden. Nach der so bearbeiteten Rückseite des Teppichs, nach dieser Bindung des Flors in der Trägerschicht mittels des Vorstrichs wird der mit seiner Rückseite oben angeordnete, gewendete Teppich in einer zweiten Etage zurücktransportiert. Nach Aufrakeln des Vorstrichs im Aggregat 11 auf den Teppichrücken wird die Beschichtung in dem sich anschließenden, horizontal sich erstreckenden Spannrahmen 12 vorgetrocknet. Diesem Spannrahmen 12 schließt sich ein weiterer, nicht dargestellter Spannrahmen mit zusätzlichen Behandlungsaggregaten an, die für das Aufgeben weiterer Schaumschichten und für Trocknung und Vulkanisation der Rückenbeschichtung zuständig sind. In diesen horizontalen Behandlungsaggregaten kann bei Trennung von Ober-und Unterluft der Flor auch noch mittels eingesprühtem Dampf behandelt und insoweit endgültig die Farbe fixiert werden.

## Patentansprüche

1. Verfarhen zum kontinuierlichen Behandeln von bahnförmiger Textilware, wie insbesondere Teppiche größerer Breite mit polförmiger Sichtseite, die einem Färbevorgang unterzogen wird, indem sie zum Netzen mit einer Minimalmenge an wäßriger Färbeflüssigkeit, die die Färbechemikalien enthält, versehen und zum Fixieren dieser Farbe durch einen Dämpfer transportiert und nach dem Färbevorgang die Textilware entwässert, ggf. vorgetrocknet wird, dadurch gekennzeichnet, daß die Textilware gleich anschließend auf der Warenrückseite mit einem Binde-Vorstrich zur Rückenbeschichtung versehen, wiederum zumindest vorgetrocknet wird, und daß ebenfalls anschließend die Rückseite der Textilware mit dem vorgetrockneten Vorstrich weiterhin mit einem Schaum, mit einem zweiten Rücken versehen oder dieser kaschiert und die Textilware anschließend in eine horizontal ausgerichtete Wärmebehandlungseinrichtung zum Trocknen und Vulkanisieren gefahren wird.

2. Verfahren nach Anspruch 1, dadurch gekennzeichnet, daß der Färbevorgang durch Bedrucken erfolgt.

3. Verfahren nach Anspruch 1, dadurch gekennzeichnet, daß - wie bekannt - zum gleichmäßigen Färben die genetzte Oberfläche der Textilware mehrfach beim Laufen entlang eines von der Textilware teilweise umschlungenen Rotors massiert und dann die Farbe dampffixiert wird.

4. Verfahren nach Anspruch 1 oder 2, dadurch gekennzeichnet, daß die Färbeflüssigkeit lediglich die zum eigentlichen Färben notwendigen Chemikalien enthält, also z.B. keine Verdicker oder Schaumchemikalien, und nach dem Dämpfen zum Farbfixieren in einem kontinuierlichen Behandlungsverfahren rückenbeschichtet wird.

5. Verfahren nach Anspruch 1 oder 3, dadurch gekennzeichnet, daß der Färbeflüssigkeit auswaschbare Hilfsmittel, wie schmutzabweisende und/oder die mechanischen Gebrauchseigenschaften positiv beeinflussende Hilfsmittel zugegeben werden.

6. Verfahren nach einem der vorhergehenden Ansprüche, dadurch gekennzeichnet, daß auf die mit einem Minimalauftrag genetzte Warenbahn ein zweiter, die Farbe verändernder Auftrag aufgegeben wird.

7. Verfahren nach Anspruch 6, dadurch gekennzeichnet, daß als zweiter Farbauftrag ein Ätzmittel, z. B. mit Schablone, aufgegeben oder aufgedruckt wird.

8. Verfahren nach Anspruch 6, dadurch gekennzeichnet, daß als zweiter Farbauftrag eine Farbe, ggf. in einer keinen Verdicker enthaltenden Schaumform, mittels Druckschablone oder Druckwalze aufgegeben wird.

9. Verfahren nach Anspruch 1 oder 3, dadurch gekennzeichnet, daß die Textilware nach dem Dämpfer lediglich auf der Warenrückseite, z. B. durch hochenergetische Strahlen, vorgetrocknet und dann dort mit dem Binde-Vorstrich versehen wird.

10. Verfahren nach Anspruch 1 oder 3, dadurch gekennzeichnet, daß die Textilware zum Vortrocknen abgesaugt wird.

11. Verfahren nach Anspruch 1 oder 3, dadurch gekennzeichnet, daß der Flor bzw. die Farbe, außer im Dämpfer weiterhin beim Vortrocknen und auch beim Trocknen der Beschichtung durch Einsprühen von Dampf auf die Florseite der Warenbahn zum Farbfixieren gedämpft wird.

12. Verfahren, insbesondere nach einemderAnsprüche 1 - 7, dadurch gekennzeichnet, daß nicht nur die Behandlungsschritte des Färbens der Florseite und Beschichtens der Warenrückseite unmittelbar hintereinander geschaltet, sondern auch die Teppichherstellung wie die Polerzeugung (Klebepoltechnik etc.) dem Färbevorgang oder gleich dem Beschichtungs- bzw. Kaschiervorgang unmittelbar vorgeschaltet ist.

13. Vorrichtung zur Durchführung des Verfahrens nach den Ansprüchen 1 - 12, gekennzeichnet durch die Hintereinanderhaltung folgender Aggregate:
a) Färbeaggregat (4 ) mit einem Farbflüssigkeitsauftragsgerät für einen Minimalauftrag, insbesondere mit einem Stabrotor (6) zur Vergleichmäßigung der Flotte auf der Ware (1), oder mit einer Druckmaschine,
b) Dämpfer, wie Hängeschlaufendämpfer (7),
c) Vorrichtung (8) zum Entwässern, ggf. Vortrocknen zumindest der Warenrückseite,
d) Auftragswerk (9, 10) für den Vorstrich und
e) horizontal sich erstreckendes Wärmebehandlungsaggregat (12) zur Vortrocknung,
f) einem zweiten Auftragswerk, dem ein
g) weiteres horizontal sich erstreckendes Wärmebehandlungsaggregat zum Trocknen und Vulkanisieren nachgeschaltet ist.

14. Vorrichtung nach Anspruch 13, dadurch gekennzeichnet, daß die Wirkung der mechanisch dynamischen Behandlung der mit der Flotte versehenen Sichtseite der Warenbahn mittels des Stabrotors durch die Drehzahl des Stabrotors steuerbar ist.

15. Vorrichtung nach Anspruch 13, dadurch gekennzeichnet, daß dem Färbeaggregat eine Einrichtung zur Herstellung des Flors auf einer Trägerbahn unmittelbar vorgeschaltet ist.

16. Vorrichtung nach Anspruch 13, dadurch gekennzeichnet, daß der Vortrockner (c) als eine der Warenrückseite zugeordnete, lotrecht ausgerichtete Infrarot-Einheit (8) mit horizontaler Nachdampfstrecke (13) ausgebildet ist.

## Claims

1. Method for the continuous treatment of web-like textile material, such as, in particular, carpets of a relatively large width having a pile-like visible side, which is subjected to a dyeing process, in that, for wetting purposes, it is provided with a minimum amount of aqueous dyeing fluid which contains the dyeing chemicals, and it is conveyed through a steamer in order to fix this dye and, after the dyeing process, the textile material is hydro-extracted, possibly pre-dried, characterised in that, immediately subsequently, the textile material is provided with a bonding primer on the back of the material to coat the back and is at least pre-dried again, and in that also subsequently the back of the textile material, which contains the pre-dried primer, is again provided with a foam, a second backing, or the latter is laminated, and the textile material is subsequently conveyed into a horizontally orientated thermal treatment apparatus for drying and vulcanising purposes.

2. Method according to claim 1, characterised in that the dyeing process is effected through printing.

3. Method according to claim 1, characterised in that - as is well-known - for uniform dyeing the wetted surface of the textile material is repeatedly massaged as it travels along a rotor which has the textile material partially looped therearound, and then the dye is steam-fixed.

4. Method according to claim 1 or 2, characterised in that the dyeing fluid merely contains the chemicals needed for the actual dyeing process, that is to say, for example, it contains no thickening agents or foaming chemicals, and the back is coated in a continuous treatment method after the steaming process to achieve dye-fixing.

5. Method according to claim 1 or 3, characterised in that auxiliary agents which are capable of being washed-out, such as dirt-repellent auxiliary agents and/or auxiliary agents which positively influence the intrinsic mechanical properties, are added to the dyeing fluid.

6. Method according to one of the preceding claims, characterised in that a second coating, which changes the colour, is applied to the material web which is wetted with a minimum coating.

7. Method according to claim 6, characterised in that an etching agent is applied or pressed-on as the second coloured coating, e.g. by means of a template.

8. Method according to claim 6, characterised in that a dye, possibly in the form of a foam containing no thickener, is applied as a second coloured coating by means of a printing template or pressure roller.

9. Method according to claim 1 or 3, characterised in that, after the steamer, the textile material is merely pre-dried on the reverse side of the material, e.g. by means of high-energy rays, and is then provided there with the bonding primer.

10. Method according to claim 1 or 3, characterised in that the textile material is drawn-out by suction prior to the pre-drying process.

11. Method according to claim 1 or 3, characterised in that, in addition to being steamed in the steamer, the nap, or respectively the dye, is again steamed for the purpose of dye-fixing during the pre-drying process and also during drying of the coating through spraying steam onto the nap side of the material web.

12. Method, more especially according to one of claims 1 - 7, characterised in that not only do the treatment steps for dyeing the nap side and for coating the back of the material directly succeed one another, but the carpet manufacture, such as the production of the pile (adhesive pile technique, etc.) also immediately precedes the dyeing process or is simultaneous with the coating or laminating process.

13. Apparatus for carrying out the method according to claims 1 - 12, characterised by the following units being provided one behind the other:
a) dyeing unit (4) having a dyeing fluid coating appliance for a minimum coating, more espe- ciallywith a rod rotor (6) fordistributing the liquor evenly over the material (1), or with a printing machine;
b) steamer, such as a suspended loop steamer (7);
c) apparatus (8) for the hydro-extraction, possible pre-drying, of at least the back of the material;
d) coating mechanism (9, 10) for the primer; and
e) horizontally extending thermal treatment unit (12) for pre-drying purposes;
g) an additional, horizontally extending thermal treatment unit for drying and vulcanising purposes is provided after
f) a second coating mechanism.

14. Apparatus according to claim 13, characterised in that the action of the mechanically dynamic treatment of the visible side of the material web, which is provided with the liquor, by means of the rod rotor, is controllable through the speed of rotation of the rod rotor.

15. Apparatus according to claim 13, characterised in that a means for producing the pile on a support web is provided immediately in front of the dyeing unit.

16. Apparatus according to claim 13, characterised in that the pre-drier (c) is in the form of a vertically orientated infrared unit (8) which is associated with the back of the material and has a horizontal re-steaming section (13).

## Revendications

1. Procédé de traitement en continu d'un produit textile en nappe ou bande, tel qu'en particulier, des tapis de largeur relativement grande, dont la face apparente ou d'endroit présente un poil, le produit textile étant soumis à une opération de teinture, au cours de laquelle il est chargé, pour son humidification, d'une quantité minimale de liquide colorant aqueux, contenant les produits chimiques colorants, et est alors transporté dans un appareil de traitement à la vapeur pour la fixation de la teinture, tandis qu'après l'opération de teinture, le produit textile est débarrassé de l'eau et éventuellement soumis à un séchage préalable, le procédé étant caractérisé en ce qu'aussitôt après, le produit textile est muni sur son côté d'envers d'un enduit préalable de liaison pour l'enduction de l'envers puis soumis au moins à un nouveau séchage préalable, et par le fait que toujours aussitôt après, l'envers du produit textile avec l'enduit préalable séché au préalable est muni d'un deuxième envers au moyen d'une mousse ou que ce deuxième envers est doublé, puis que le produit textile est acheminé dans une installation de traitement par la chaleur afin d'être séché et vulcanisé.

2. Procédé suivant la revendication 1, caractérisé en ce que l'opération de teinture est effectuée par impression.

3. Procédé suivant la revendication 1, caractérisé en ce que - comme il est connu - afin qu'une teinture uniforme et régulière puisse être obtenue, la face humidifiée du produit textile est "massée" plusieurs fois par passage sur la longueur d'un rotor, qui est alors partiellement entouré par le produit textile, et en ce que la teinture est ensuite fixée à la vapeur.

4. Procédé suivant l'une ou l'autre des revendications 1 et 2, caractérisé en ce que le liquide de teinture contient uniquement les produits chimiques qui sont nécessaires à la teinture proprement dite et ne contient par conséquent aucun agent d'épaississement, ni produit chimique formateur de mousse, par exemple, et en ce qu'après le traitement à la vapeur destiné à assurer la fixation de la teinture, le produit textile est muni au côté d'envers d'une couche de revêtement par un procédé de traitement en continu.

5. Procédé suivant l'une ou l'autre des revendications 1 et 3, caractérisé en ce qu'au liquide de teinture, il est ajouté des agents auxiliaires pouvant être éliminés par lavage, tels que des agents auxiliaires destinés à éviter l'encrassement et/ou des agents auxiliaires destinés à influencer positivement les propriétés mécaniques du produit textile à l'usage.

6. Procédé suivant l'une quelconque des revendications précédentes, caractérisé en ce qu'à la nappe ou à la bande de produit textile humidifiée au moyen d'une charge d'apport minimale, il est appliqué une seconde charge d'apport, qui est destiné à modifier la couleur du produit textile.

7. Procédé suivant la revendication 6, caractérisé en ce que, comme seconde charge d'apport de teinture, il est utilisé un agent d'attaque qui est appliqué ou imprimé, par exemple au pochoir.

8. Procédé suivant la revendication 6, caractérisé en ce que, comme seconde charge d'apport de teinture, il est utilisé une teinture, éventuellement sous la forme d'une mousse ne contenant aucun agent d'épaississement, qui est appliquée par impression au pochoir ou par impression au cylindre imprimeur.

9. Procédé suivant l'une ou l'autre des revendications 1 et 3, caractérisé en ce que le produit textile, après son passage par l'appareil de traitement à la vapeur, est, uniquement au côté d'envers, soumis à un séchage préalable, par exemple par rayonnement à forte énergie, et est ensuite, à ce côté d'envers, muni d'un enduit préalable de liaison.

10. Procédé suivant l'une ou l'autre des revendications 1 et 3, caractérisé en ce que le produit textile est soumis à une opération d'aspiration en vue du séchage préalable.

11. Procédé suivant l'une ou l'autre des revendications 1 et 3, caractérisé en ce que le poil et la teinture, outre qu'ils sont soumis à un traitement à la vapeur dans un appareil prévu pour un tel traitement, sont encore, lors du séchage préalable, de même que lors du séchage de la couche de revêtement, soumis à un traitement à la vapeur par pulvérisation de vapeur au côté poil de la nappe ou de la bande de produit textile, en vue de la fixation de la teinture.

12. Procédé, en particulier suivant l'une quelconque des revendications 1 à 7, caractérisé en ce que non seulement les phases de traitement de la teinture du côté poil du produit textile et du revêtement du côté d'envers du produit textile sont commandées immédiatement à la suite l'une de l'autre, mais encore que la fabrication du tapis, telle que la production du poil (procédé de collage du poil, etc.), est commandée immédiatement avant l'opération de teinture ou même avant l'opération de revêtement ou de doublage.

13. Dispositif destiné à la mise en oeuvre du procédé suivant les revendications 1 à 12, caractérisé en ce qu'il comporte, prévus l'un à la suite de l'autre, les groupes qui sont indiqués ci-après :
a) groupe de teinture (4), avec un appareil d'apport de liquide de teinture pour une charge d'apport minimale, en particulier avec un rotor à barres (6) destiné à uniformiser le bain sur le produit textile (1), ou avec une machine d'impression,
b) un appareil de traitement à la vapeur, tel qu'un appareil (7) destiné au traitement à la vapeur de boucles suspendues de produit textile,
c) dispositif (8) destiné à l'élimination de l'eau, éventuellement au séchage préalable, au moins du côté d'envers du produit textile,
d) appareil d'apport (9, 10) pour l'application de l'enduit préalable, et
e) groupe de traitement à la chaleur (12) s'étendant dans le sens horizontal, destiné au séchage préalable,
f) un second dispositif d'application de charge d'apport, auquel fait suite
g) un autre groupe de traitement à la chaleur, qui est destiné au séchage et à la vulcanisation.

14. Dispositif suivant la revendication 13, caractérisé en ce que effet du traitement dynamique, par moyen mécanique, de la face apparente de la nappe ou de la bande de produit textile, face apparente qui est soumise à l'action du bain, au moyen du rotor à barres, est réglé par le nombre de tours ou vitesse de rotation du rotor à barres.

15. Dispositif suivant la revendication 13, caractérisé en ce qu'il comporte, immédiatement en amont du groupe de teinture, un appareil de formation de poil sur une nappe ou une bande de support.

16. Dispositif suivant la revendication 13, caractérisé en ce que l'appareil de séchage préalable (c) est prévu sous la forme d'une unité à rayonnement infrarouge (8), qui est dirigée verticalement et qui agit sur le côté d'envers du produit textile, unité de rayonnement qui comporte une zone horizontale (13) de traitement à la vapeur complémentaire.
